Europäisches Patentamt

European Patent Office

Office européen des brevets

(11) Publication number: **0 476 352 A1**

## EUROPEAN PATENT APPLICATION

(21) Application number: **91114183.6**

(22) Date of filing: **23.08.91**

(51) Int. Cl.⁵: **C22C 26/00**

(30) Priority: **30.08.90 US 575280**

(43) Date of publication of application:
**25.03.92 Bulletin 92/13**

(84) Designated Contracting States:
**DE FR GB IT SE**

(71) Applicant: **HUGHES TOOL COMPANY**
**5425 Polk Avenue**
**Houston Texas 77023(US)**

(72) Inventor: **Scott, Danny E.**
**10915 Sageburrow**
**Houston, Texas 77062(US)**

(74) Representative: **Herrmann-Trentepohl,**
**Werner, Dipl.-Ing. et al**
**Kirschner, Grosse, Bockhorni Forstenrieder**
**Allee 59**
**W-8000 München 71(DE)**

(54) **Earth boring drill bit with improved wear inserts.**

㊻ An improved insert is shown for use in a rotary rock bit of the type adapted to be made up in a drill string extending from the surface of the earth down a borehole. The improved insert is formed of a diamond impregnated carbide containing dispersed diamond crystals, the crystals being formed via the in-situ conversion of graphite to diamond.

*Fig.1*

EP 0 476 352 A1

## BACKGROUND OF THE INVENTION

### 1. Field of the Invention:

The present invention relates generally to earth boring bits of the type used to drill oil and gas wells and, more specifically, to such a bit having improved wear inserts of cemented tungsten carbide containing dispersed diamond crystals formed via the in-situ conversion of dispersed graphite.

### 2. Description of the Prior Art:

Rolling cone rock bits have rotary cutters which rotate on and break up earthen formations. In forming the bore hole, the diameter of the hole must be held within close tolerances to prevent, e.g., pinching of the bit or the necessity of reaming out a hole bored under diameter. The portion of the rock bit which determines the bore hole diameter is referred to as the gage row. The gage row on the rotary cutters is subject to a very abrasive environment. In some applications, rolling cone rock bits suffer from excessive wear of the cutting structure and gage surfaces. Hardened wear resistance inserts have been developed to prolong the useful life of both the cutting structure and gage surfaces of the rotary cutters.

It has long been recognized that tungsten carbide as a matrix for diamonds has the advantage that the carbide itself is wear resistant and offers prolonged matrix life. U.S. Patent No. 1,939,991 to Krusell describes a diamond cutting tool utilizing inserts formed of diamonds held in a medium such as tungsten carbide mixed with a binder of iron, cobalt, or nickel. In some prior art cutting tools, the diamond component of the tool was formed by the conversion of graphite to diamond. U.S. Patent No. 3,850,053 describes a technique for making cutting tool blanks by placing a graphite disk in contact with a cemented tungsten carbide cylinder and exposing both simultaneously to diamond forming temperatures and pressures. U.S. Patent No. 4,259,090 describes a technique for making a cylindrical mass of polycrystalline diamond by loading a mass of graphite into a cup-shaped container made from tungsten carbide and diamond catalyst material. The loaded assembly is then placed in a high temperature and pressure apparatus where the graphite is converted to diamond.

U.S. Patent No. 4,525,178 shows a composite material which includes a mixture of individual diamond crystals and pieces of precemented carbide. The mixture is heated and pressurized to create intercrystalline bonds between the diamond crystals and chemical bonds between the diamond crystals and the precemented carbide pieces. None of the above techniques involved the in-situ conversion of dispersed graphite to diamond.

The prior art thus reveals methods for making diamond impregnated cemented carbide in which diamond particles are blended in with carbide powder and either a hot press or standard sintering techniques, are used for final sintering. However, such techniques have suffered from several disadvantages, the primary disadvantage being diamond retention. U.S. Patent No. 4,525,178 was an attempt to improve upon the prior art. Instead of blending diamond crystals with a tungsten carbide matrix powder and processing the blend using powder metallurgy technology, chunks of sintered tungsten carbide were ground up and mixed with diamond crystals. The mixture of diamond crystals and precemented carbide chunks was placed into a HPHT apparatus to sinter the materials into a solid composite body. The process was dependant upon forming intercrystalline bonds between diamond crystals and precemented carbide particles. The technique was also limited in the shapes that could be formed because the low density green bodies were placed in an HPHT apparatus capable of reaching conditions in excess of 40 kilobars pressure and 1200°C temperature. The shapes which could be formed were limited to those shapes which could be formed in an HPHT press. It was also not possible to make a composite having a diamond grain size which was on the order of magnitude of the size of the individual carbide grains, since the prior art process employed chunks of precemented carbide as a starting material.

A need exists for an improved wear resistant insert for use in an earth boring bit which will improve the useful life of the bit.

A need exists for an improved wear resistant insert which is formed from a diamond impregnated carbide in which standard powder metallurgy starting materials are utilized.

A need also exists for such an improved wear resistant insert made from a diamond impregnated carbide which does not rely upon the use of diamond crystals and precemented carbide particles as starting materials.

A need also exists for an improved wear resistant insert for a rotary rock bit formed from a diamond impregnated carbide which is characterized as having dispersed diamond crystals produced in-situ, the diamond crystals being intergrown and intertwined with the individual carbide grains of the insert.

A need also exists for an improved wear resistant insert for a rotary rock bit formed from a diamond impregnated carbide which has improved abrasion resistance and diamond retention characteristics.

## SUMMARY OF THE INVENTION

The improved wear resistant insert of the invention is adapted for use in a rotary rock bit of the type which is made up in a drill string extending from the surface of the earth down a borehole, the improved insert comprising a diamond impregnated carbide matrix containing dispersed diamond crystals, the crystals being formed via the in-situ conversion of graphite to diamond.

Preferably, the diamond impregnated carbide matrix is diamond impregnated tungsten carbide having diamond crystals dispersed around individual grains of tungsten carbide, the diamond crystals being intergrown and intertwined with the individual carbide grains of the insert. The particle size of the individual tungsten carbide grains are preferably about 0.5 to 30 microns, most preferably about 2 to 5 microns. The particle size of the dispersed diamonds which are formed in-situ can range from about 0.5 to 1000 microns, but are preferably on the same order as the tungsten carbide grains, i.e. about 0.5 to 30 microns, most preferably about 2 to 5 microns.

The improved earth boring bit of the invention has the improved wear resistant inserts mounted thereon as a component of the cutting structure and of the gage surface of the bit.

The improved wear resistant inserts are formed by first forming a particle blend, the particle blend being comprised of an unsintered carbide matrix having excess free carbon added thereto, the carbide matrix being comprised of at least one metal carbide powder combined with a binder including at least one elemental powder or alloy known to be a diamond catalyst. Preferably, the particle blend is comprised of graphite particles which are blended with particles of an unsintered carbide matrix, the unsintered carbide matrix being comprised of at least one metal carbide powder combined with a binder which includes at least one elemental powder or alloy known to be a diamond catalyst. The particle blend is first formed into a green body of a desired shape. The green body is then sintered to form a sintered body containing graphite particles. The sintered body containing graphite particles is then subjected to temperature and pressure conditions sufficient to convert the graphite to diamond in-situ.

Most preferably, the graphite particles are blended with an unsintered carbide matrix which is comprised of tungsten carbide powder combined with a binder which includes at least one elemental powder known to be a diamond catalyst, the elemental powder being selected from the group consisting of nickel, cobalt, iron, aluminum and alloys thereof.

The wear resistant inserts of the invention provide a drill bit cutting structure and gage surface with improved abrasion resistance and diamond retention characteristics.

Additional objects, features and advantages will be apparent in the written description which follows.

## BRIEF DESCRIPTION OF THE DRAWINGS

Figure 1 is a perspective view of an earth boring bit of the invention having the wear resistant inserts used as earth disintegrating teeth in cones rotatably secured to bearing shafts and as gage surfaces of the bit.

Figure 2 is a flow diagram showing the manufacturing steps utilized to form a diamond impregnated carbide of the invention;

Figure 3 is a microscopic view of a diamond impregnated carbide of the type used in the improved cutting structure of the bit of Figure 1, the carbide containing 40% by volume diamond after conversion, the view being taken at 200X magnification;

Figure 4 is a microscopic view of the diamond impregnated carbide of Figure 3 at 1500X magnification showing the diamond-carbide intermingling which occurs.

## DETAILED DESCRIPTION OF THE INVENTION

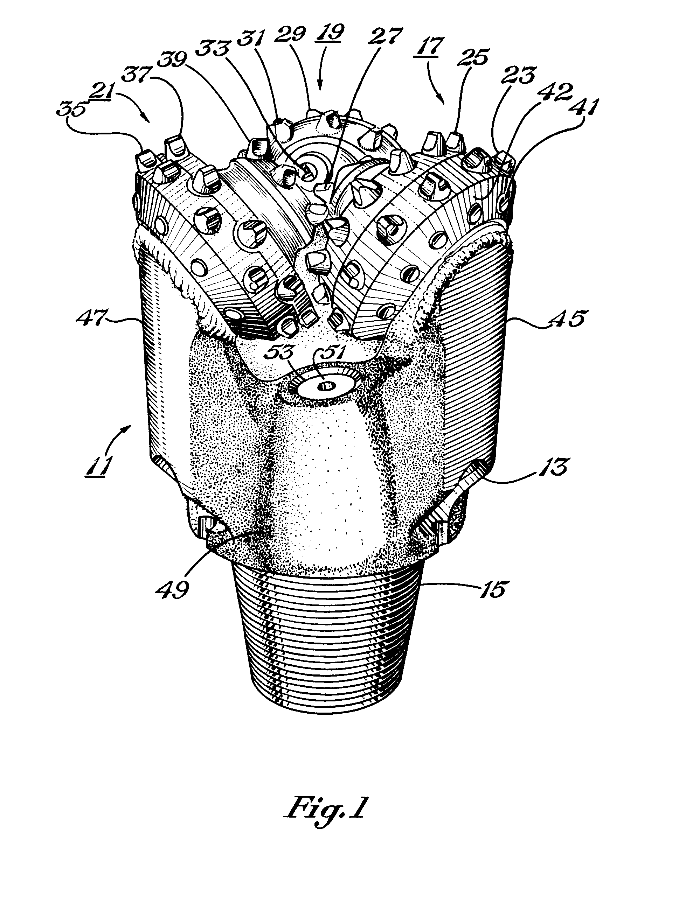

The numeral 11 in Figure 1 of the drawings designates an earth boring bit of the invention having three rotatable cutters, each having wear resistant inserts used as earth disintegrating teeth.

A bit body 13 has an upper end which is threaded at 15 to be secured to a drill string member (not shown) used to raise and lower the bit in a well bore and to rotate the bit during drilling. This particular bit has three cones designated by the numerals 17, 19 and 21.

The inserts that form the earth disintegrating teeth in bit 11 are arranged in circumferential rows, here designated by the numerals 23, 25 and 27 on cone 17; by the numerals 29, 31 and 33 on cone 19; and by the numerals 35, 37 and 39 on cone 21. Additional inserts, called "gage" inserts 41 are shown protruding from a gage surface 42 on each cone, such as cone 17. The circumferential rows of inserts 23, 29 and 35 are known as the "heel row" inserts which disintegrate the formation at the outermost region adjacent the wall of the hole.

The bit 11 is composed of sections 45, 47 (and another not shown) that are welded, as at 49. Although not shown in Figure 1, the interior of the bit body is hollow to contain fluid directed into three passages, one each of which supplies a nozzle 51. Typically, the nozzle is formed of wear resistant material such as sintered tungsten carbide retained in a receiving drilled hole with a snap ring 53.

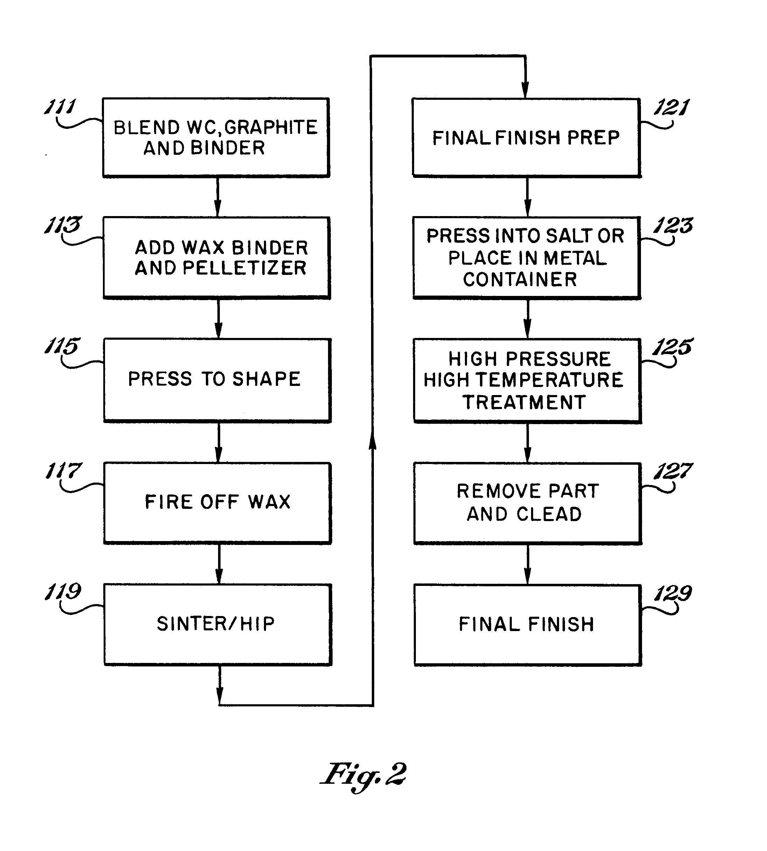

The method of forming the wear resistant inserts of the invention will be described with reference to the flow diagram of Figure 2. In the first step of the method, illustrated as 111, a particle blend is first formed comprised of an unsintered carbide matrix having excess free carbon added thereto. Preferably, the carbide matrix is comprised of at least one metal carbide powder combined with a binder including at least one elemental powder or alloy known to be a diamond catalyst. The metal carbide powder can conveniently be selected from the group consisting of Ti, Zr, Hf, V, Nb, Ta, Cr, Mo, or W. Most preferably, the carbide powder is tungsten carbide, WC.

The binder which is combined with the metal carbide powder will be familiar to those skilled in the powder metallurgy arts and can be a binder such as Ni, Co, Fe, or alloys thereof, or any other element from rows 3, 4, 5 or 6 of the periodic table that is known to be a diamond catalyst.

The source of excess, free carbon can conveniently be natural or synthetic graphite particles or flakes, the graphite having a particle size on the order of 0.2-1000 microns, preferably about 0.5 to 10 microns, most preferably about 2-5 microns, the particle size being approximately the same as the particle size of the metal carbide powder selected for use in the particle blend.

The preferred total free carbon content of the particle blend is in the range from about 0.5 to 50% by volume, based on the total volume of the particle blend. Higher free carbon contents are thought to inhibit compact pressability and can lead to carbon segregation in many processing steps due to the large density difference between carbon and the other hard metal constituents of the body.

After blending the metal carbide, graphite and binder powders, the powder mixture has a wax added (for instance paraffin or Carbowax) to consolidate the powder blend and the powders are pelletized, using standard powder metallurgy techniques. This step is illustrated as 113 in Figure 1.

It will be appreciated that in the next step (115 in Figure 1) of the method, the shapes and sizes of the pelletized bodies used to form the diamond impregnated carbides of the invention can be varied to suit particular applications. After the step of pressing the pellets to shape 115 and firing off the waxes present 117, the green body of desired shape is then sintered in a step 119 using atmospheric, vacuum or HIP sintering. Preferably, the green body is sintered in a conventional sinter/HIP apparatus at about 1400°C and at about 400 psi of pressure in an argon atmosphere.

The sintered body containing graphite particles is then given any final finishing or shaping which may be desired in a step 121. The sintered body is then placed into a metal container or plated with a protective metal overcoat and then pressed within a salt block in a step 123. The protective metal overcoat can be any pure metal that can be plated onto the sintered body, for instance nickel. Preferably, the sintered body with the protective metal overcoat is encapsulated within ordinary salt, the salt which surrounds the sintered body being used to equalize the force applied to the body in subsequent steps to prevent unwanted deformation of the body.

The body is then loaded into a HPHT apparatus in a step 125 and exposed to conditions sufficient to convert the graphite to diamond. Ultra high pressure and temperature cells are described, for instance, in U.S. Patent No. 3,913,280, and U.S. Patent No. 3,745,623 and will be familiar to those skilled in the art. These devices are capable of reaching conditions in excess of 40 kilobars pressure and 1200°C temperature. The HPHT apparatus converts the graphite in the dense sintered bodies "in-situ" into diamond skeletal crystals with little shape change other than slight shrinkage of the part owing to the conversion process. However, because the original graphite grains are intimately intergrown and intertwined with individual tungsten carbide grains during the sintering process before HPHT exposure, the diamond forms skeletal crystals which are intergrown and intertwined with the individual carbide grains as well. The result is a unique microstructure which gives the added advantage of physical bonding/interlocking of the diamond mass into the resulting matrix. This physical bonding enhances diamond retention. By "in-situ" is meant that the diamond is formed in place within the sintered carbide matrix from the graphite particles which are dispersed uniformly within the matrix powder blend. Diamond is not added to the powder blend in the form of existing diamond crystals.

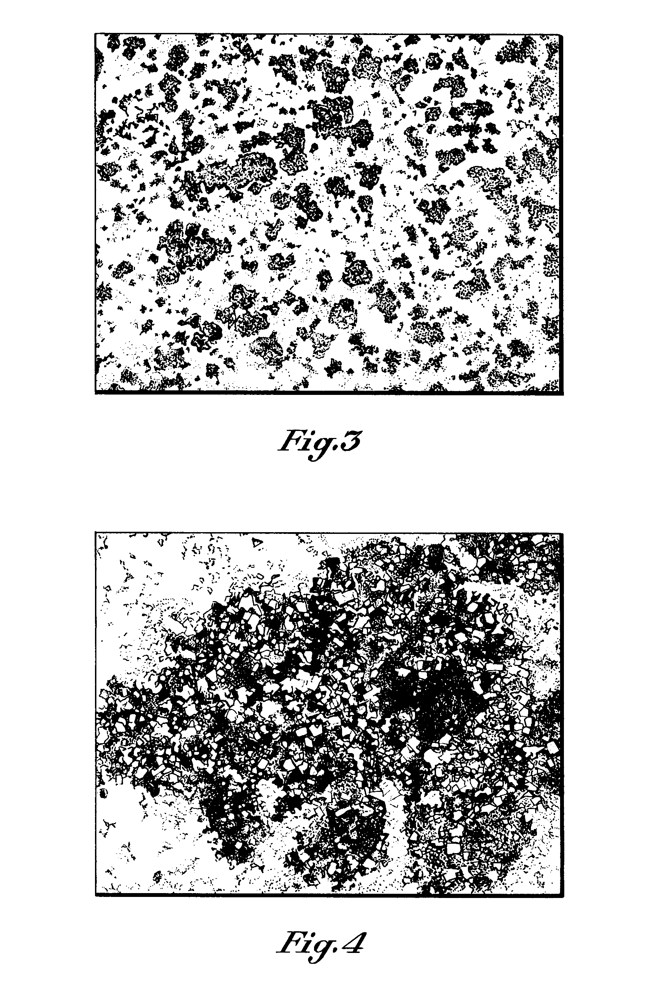

Figure 2 is a microscopic view of a diamond impregnated carbide at 200X magnification formed by the previously described method. Figure 3 is a similar view at 1500X magnification after conversion of the

EP 0 476 352 A1

graphite to diamond showing the extreme diamond carbide intermingling.

The diamond impregnated composite so formed can then be removed from the HPHT apparatus in a step 127, cleaned to remove any salt residue, and subjected to any final finishing such as polishing or plating in a final step 129.

The following examples are intended to be illustrative of the manufacturing method used to form the wear resistant inserts of the invention:

EXAMPLE I

|  | wt. % |
|---|---|
| 769 g. WC (SYLCARB SC-45/GTE SYLVANIA) | 76.9 |
| 117 g. Fe (-325 mesh/QUEBEC METAL POWDERS) | 11.7 |
| 66 g. Ni (Type 255, ALCAN) | 6.6 |
| 48 g. C (standard graphite flakes) | 4.8 |
| 20 g. Paraffin | |
| 15 g. Carbowax | |

Example I shows a typical formulation of the powder blend which is used to form the diamond impregnated composite of the invention.

The powder blend of tungsten carbide, binder and free carbon was milled in a one liter container for 24 hours at 80 rpm. Wax was added as a binder and the powders were pressed to form 5 kilogram compacts. The compacts were then treated as previously described to form diamond impregnated carbides.

Example II is similar to Example I but shows the use of a cobalt binder.

EXAMPLE II

|  | wt. % |
|---|---|
| 698 g. WC | 69.8 |
| 222 g. Co | 22.2 |
| 80 g. C | 8.0 |
| 20 g. Paraffin | |
| 20 g. Carbowax | |

Example III is a typical formulation, similar to Example II, but shows the use of an iron, nickel, cobalt binder.

EXAMPLE III

711 g. WC
132.5 g. Fe
41.4 g. Ni
33.1 g. Co
82.0 g. C
20 g. Paraffin
20 g. Carbowax

Example IV shows the use of a nickel-cobalt binder.

EXAMPLE IV

36.3 g. C (Standard Production Graphite Flakes)
89.0 g. Ni (Type 255, ALCAN)
89.0 g. Co (Afrimet extra-fine)
785.7 g. WC (4.0um SYLCARB SC-45/GTE SYLVANIA)

5

30.0 g. Wax (Standard Production Paraffin)
150 ml Hexane
150 ml Acetone
5.0 kg WC Attritor Balls
Mill Time: 16 hrs
Mill Speed: 80 rpm

The components were formulated to achieve a 25 vol.% 50Ni/50Co ratio with 20 vol.% C. The compacts which were formed were treated as previously described to form diamond impregnated carbides.

The wear resistant inserts of the invention can be used to form a part of the cutting structure of the bit 11, for instance as the earth disintegrating teeth 23, 25, 27 in Figure 1. The inserts can also be used as gage inserts 42.

An invention has been provided with several advantages. The improved inserts of the invention can be manufactured using commercially available starting materials including tungsten, or any other metal carbide powder, elemental powders of nickel, cobalt and iron, or other known graphite to diamond catalyst, and graphite powder. All of these materials are readily available. A dense sintered body is created from a blend of these powders and complex shapes can be formed using standard tungsten carbide powder processing techniques. These dense sintered bodies are then placed in an HPHT apparatus where the graphite is converted "in-situ" into diamond with no other shape change than slight shrinkage of the part owing to the conversion process. Because standard tungsten carbide powder processing techniques are utilized, any shape that can be made by such standard techniques can be made using the method of the invention. It is not necessary that the shape be limited to a shape that can be formed in the HPHT press. Because the original graphite grains are intimately intergrown and intertwined with individual tungsten carbide grains during the sintering process before HPHT exposure, the diamond forms skeletal crystals which are intergrown and intertwined with the individual carbide grains during the ultra high temperature and pressure step. The resulting microstructure is unique in the industry and provides improved physical bonding/interlocking of the diamond mass into the matrix leading to improved diamond retention.

While the invention has been shown in only one of its forms, it is not thus limited, but is susceptible to various changes and modifications without departing from the spirit thereof.

## Claims

1. An improved insert for use in a rotary rock bit of the type adapted to be made up in a drill string extending from the surface of the earth down a borehole, the improved insert comprising a diamond impregnated carbide containing dispersed diamond crystals, the crystals being formed via the in-situ conversion of graphite to diamond.

2. The improved insert of claim 1, wherein the diamond impregnated carbide is diamond impregnated tungsten carbide having diamond crystals dispersed around individual grains of tungsten carbide, the diamond crystals being intergrown and intertwined with the individual carbide grains of the insert.

3. The improved insert of claim 2, wherein the particle size of the dispersed diamonds which are formed in-situ and the particle size of the individual tungsten carbide grains are both in the range from about 0.2 to 1000 microns.

4. The improved insert of claim 3, wherein the particle size of the dispersed diamonds which are formed in-situ and the particle size of the individual tungsten carbide grains are both in the range from about 2 to 5 microns.

5. An improved earth boring bit of the type having rotary cutters defining a cutting structure for boring a hole, the cutters being mounted rotatably on a shank, the improvement comprising wear inserts on the cutting structure, the wear inserts comprising a diamond impregnated carbide containing dispersed diamond crystals, the crystals being formed via the in-situ conversion of graphite to diamond.

6. An improved earth boring bit of the type having rotary cutters defining a cutting structure for boring a hole, the cutters being mounted rotatably on a shank, the improvement comprising wear inserts on the cutting structure, the wear inserts comprising a diamond impregnated carbide containing dispersed diamond crystals, the crystals being formed via the in-situ conversion of graphite to diamond, the diamond impregnated carbide matrix being formed by:

(a) first, blending graphite particles with particles of an unsintered carbide matrix to produce a particle blend;

(b) next, forming the particle blend into a green body of a desired shape;

(c) next, sintering the green body;

(d) plating the insert with a protective metal coating; and

(e) thereafter, subjecting the sintered body containing graphite particles to temperature and pressure conditions sufficient to convert the graphite to diamond in-situ.

7. An improved earth boring bit of the type having rotary cutters defining a cutting structure for boring a hole, the cutters being mounted rotatably on a shank, the improvement comprising wear inserts on the cutting structure, the wear inserts comprising:

a diamond impregnated carbide matrix, the carbide being comprised of graphite particles which are first blended with particles of an unsintered carbide matrix, the unsintered carbide matrix being comprised of at least one metal carbide powder combined with a binder which includes at least one elemental powder known to be a diamond catalyst, the unsintered carbide matrix being first formed into a green body of a desired shape, the green body then being sintered and thereafter, the sintered body being subjected to temperature and pressure conditions sufficient to convert the graphite to diamond in-situ.

8. The improved drill bit of claim 7, wherein the metal carbide powder is selected from the group consisting of W, Ti, Zr, Hf, V, Nb, Ta, Cr and Mo.

9. The improved drill bit of claim 8, wherein the elemental powder known to be a diamond catalyst is selected from the group consisting of elements from rows 3, 4, 5 or 6 of the periodic table known to be diamond catalysts.

10. The method of claim 9, wherein the elemental powder known to be a diamond catalyst is selected from the group consisting of Ni, Co, Fe, Al, B and alloys thereof.

11. The method of claim 10, wherein the particle size of the graphite particles used in forming the particle blend is in the range from about .2-1000 microns.

12. The improved drill bit of claim 11, wherein the binder is present in the range from about 5 to 50% by volume, based on the total volume of the particle blend.

13. The improved drill bit of claim 12, wherein the green body is sintered at a temperature below about 1500°C and at a pressure below about 1000 psi.

14. The improved drill bit of claim 13, wherein the sintered body is subjected to a temperature of at least about 1200°C and a pressure of at least about 40 kilobars in an HPHT apparatus to convert the free carbon to diamond in-situ.

15. An improved earth boring bit of the type having rotary cutters defining a gage diameter of a hole being bored, the cutters being mounted rotatably on a shank, the improvement comprising wear inserts at the gage row of the cutters comprising a diamond impregnated carbide containing dispersed diamond crystals, the crystals being formed via the in-situ conversion of graphite to diamond.

16. An improved earth boring bit of the type having rotatable cutters, the improvement comprising wear resistant inserts used as earth disintegrating teeth on each of the cutters, each wear resistant insert comprising a cemented tungsten carbide body containing dispersed diamond crystals which exhibit diamond-to-diamond bonding via the in-situ conversion of graphite particles to diamond in the cemented tungsten carbide body.

*Fig.1*

**111** — BLEND WC, GRAPHITE AND BINDER

**113** — ADD WAX BINDER AND PELLETIZER

**115** — PRESS TO SHAPE

**117** — FIRE OFF WAX

**119** — SINTER/HIP

**121** — FINAL FINISH PREP

**123** — PRESS INTO SALT OR PLACE IN METAL CONTAINER

**125** — HIGH PRESSURE HIGH TEMPERATURE TREATMENT

**127** — REMOVE PART AND CLEAD

**129** — FINAL FINISH

Fig. 2

*Fig.3*

*Fig.4*

# EUROPEAN SEARCH REPORT

## EP 91 11 4183

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 274 840   (HOUSEMAN)<br>– – – | 1,5-8 | C 22 C 26/00 |
| A | US-A-4 274 840   ( )<br>* abstract * *<br>– – – | 15,16 | |
| Y | WORLD PATENTS INDEX LATEST Derwent Publications Ltd., London, GB; AN 88-135831<br>& JP-A-63 076 841 (TATSURO KURATOMI) 7 April 1988 | 1,5-8 | |
| A | <br>– – – | 15,16 | |
| A | WORLD PATENTS INDEX LATEST Derwent Publications Ltd., London, GB; AN 89-011272<br>& JP-A-63 286 548 (ISHIZUKA KENKYU-SHO) 24 November 1988<br>* abstract * *<br>– – – | | |
| A | US-A-3 702 573   (NEMETH)<br>– – – | | |
| A,D | US-A-4 525 178   (HALL)<br>– – – – – | | |

| TECHNICAL FIELDS SEARCHED (Int. Cl.5) |
|---|
| C 22 C<br>E 21 B |

The present search report has been drawn up for all claims

| Place of search | Date of completion of search | Examiner |
|---|---|---|
| The Hague | 18 December 91 | ASHLEY G.W. |